Europäisches Patentamt

European Patent Office

Office européen des brevets

(19)

(11) Numéro de publication: **0 182 688**
**B1**

(12) **FASCICULE DE BREVET EUROPEEN**

(45) Date de publication du fascicule du brevet:
**01.06.88**

(21) Numéro de dépôt: **85402055.9**

(22) Date de dépôt: **23.10.85**

(51) Int. Cl.⁴: **B 01 D 29/30**, B 01 D 29/46,
D 21 D 5/16

(54) Perfectionnements aux tamis pour épurateurs et à leur mode de fabrication.

(30) Priorité: **12.11.84 FR 8417189**

(43) Date de publication de la demande:
**28.05.86 Bulletin 86/22**

(45) Mention de la délivrance du brevet:
**01.06.88 Bulletin 88/22**

(84) Etats contractants désignés:
**AT BE CH DE FR GB IT LI NL SE**

(56) Documents cités:
**BE - A - 723 425**
**FR - A - 552 950**
**FR - A - 672 494**
**FR - A - 1 055 784**
**FR - A - 1 118 891**
**FR - A - 1 271 262**
**GB - A - 154 612**
**GB - A - 2 067 911**
**US - A - 2 747 741**

(73) Titulaire: **E. + M. Lamort Société Anonyme dite:, rue de
la Fontaine Ludot, F-51300 Vitry-le-François (FR)**

(72) Inventeur: **Lamort, Pierre, Butte dite du Donjon,
F-51300 Vitry en Perthois (FR)**

(74) Mandataire: **Loyer, Bertrand et al, Cabinet Pierre
Loyer 77, rue Boissière, F-75116 Paris (FR)**

# Description

La présente invention se rapporte aux épurateurs ou séparateurs, particulièrement aux épurateurs de pâte à papier du type comportant un ou plusieurs tamis à fentes.

Les épurateurs de pâtes à papier comportent généralement des tamis munis soit de fentes, soit de trous et qui sont constitués en une tôle de métal inoxydable tel que l'acier inox.

Le perçage de trous dans une telle tôle ne pose pas de problèmes de fabrication, mais il n'en est pas de même de la réalisation de fentes fines et calibrées, dont les bords sont généralement évasés, au moins sur une face de la tôle, selon des configurations et des angles déterminés.

La largeur de ces fentes est en effet de l'ordre de 0,15 mm à 1 mm pour des tamis pouvant aller, en cas de tamis cylindrique, de 0,25 m à 1,50 m de diamètre et 0,30 m à 1,50 m de hauteur ou longueur.

Dans la pratique actuelle, ces tamis sont réalisés soit par fraisage et sciage d'une tôle, soit par juxtaposition de barrettes parallèles constituant une grille, les barrettes étant assemblées par soudure sur des traverses généralement perpendiculaires aux barres et formant des cerclages.

Ce dernier mode de réalisation présente des inconvénients majeurs, dus à la présence des soudures qui sont fragiles en raison des phénomènes de cristallisation du métal inoxydable qu'elles provoquent et qui ont aussi l'inconvénient d'affaiblir la résistance chimique du métal.

De plus, de tels épurateurs comportent généralement des rotors portant des ailettes ou foils qui se déplacent à proximité de la surface du tamis pour créer des dépressions et surpressions dont le rôle est d'assurer le nettoyage du tamis et d'empêcher le bouchage des fentes par accumulation des fibres. La vitesse de rotation de ces rotors est élevées et entraîne les efforts tangentiels très importants sur les barrettes. Ces efforts tendent à faire basculer les barrettes lorsqu'elles sont disposées suivant les génératrices tu tamis, ce qui est le cas le plus fréquent. Elles imposent aux soudures des tensions alternées qui provoquent leur rupture.

L'invention vise à résoudre ce problème et a pour objet un tamis à fentes réalisé sur une partie au moins de sa surface par assemblage de barrettes parallèles sur des traverses, caractérisé en ce que les barrettes sont assemblées sans soudure sur les traverses par le moyen d'encoches en queue d'aronde portées par les barrettes (premières encoches), encoches dont les lèvres pénètrent dans au moins une rainure latérale en V portée par chaque traverse, celles-ci portant des encoches de positionnement des barrettes sur leur face portant les barrettes (secondes encoches), la section transversale des traverses au droit des secondes encoches ayant mêmes configuration et dimensions que la section des premières encoches, et la section transversale des barrettes au droit des premières encoches ayant même configuration que la section des secondes encoches portées par les traverses.

L'invention vise également les dipositions préférentielles ci-après:

a) Les premières encoches sont dissymétriques et ont une face perpendiculaire à l'axe de la barrette, l'autre étant inclinée d'un angle de préférence de l'ordre de 20 à 25°.

b) Les extrémités d'une traverse ont, sur une longueur correspondant à plusieurs secondes encoches, une épaisseur (considérée parallèlement aux barrettes) de l'ordre de la moitié de l'épaisseur dans la zone centrale de façon à reconstituer la section de la traverse par superposition desdites extrémités, lesquelles sont assemblées par serrage des flancs des premières encoches des barrettes qui les recouvrent.

c) Les barrettes et les traverses sont d'épaisseur voisine et les premières et secondes encoches ont des profondeurs dont la somme est voisine de cette épaisseur.

d) Les barrettes ont une section de forme générale trapézoïdale, et les premières encoches sont placées sur le petit côté du trapèze.

e) Il est prévu, de place en place, des barrettes d'épaisseur supérieure constituant des obstacles en surépaisseur sur la face étroite des fentes constituée par le rapprochement des barrettes.

f) Le tamis est cylindrique, de section circulaire ou polygone régulier, les barrettes sont parallèles à l'axe du cylindre et les traverses sont perpendiculaires à cet axe.

g) Le tamis est plan et comporte une multiplicité de surfaces élémentaires de tamisage réalisées selon l'invention, chacune disposée de sorte que, soit les barrettes, soit les traverses soient disposées sensiblement radialement par rapport au centre du tamis.

L'invention vise également les épurateurs munis de tels tamis, ainsi que le mode de réalisation d'un tel tamis ou surface élémentaire de tamisage consistant:

à plier les barrettes au niveau des premières encoches selon un angle au moins égal à l'angle de dépouille de ces encoches;

à les placer sur les traverses;

à redresser ensuite les barrettes enserrant les traverses et, lorsque le tramis est cylindrique,

à réaliser la fermeture du cylindre par superposition des extrémités de traverses d'épaisseur réduite à la moitié et mise en place, avec serrage, des barrettes.

La description qui suit, avec référence au dessin annexé, a pour but d'illustrer les caractéristiques de l'invention par des exemples de réalisation. Sur ce dessin:

La figure 1 est une vue schématique, en perspective, d'un tamis cylindrique à section circulaire;

La figure 2 est une vue schématique en coupe axiale d'un épurateur muni d'un tamis selon l'invention;

La figure 3 illustre, en perspective, l'assemblage d'une barrette sur une traverse;

La figure 4 est une vue de détail, en coupe longitudinale A-A (figure 5) d'une barrette assemblée à une traverse;

La figure 5 est une vue de détail, en coupe longitudinale B-B (figure 4) d'une traverse munie de barrettes;

La figure 6 illustre une variante à fentes dissymétriques pour un tamisage centripète;

La figure 7 illustre une variante à fentes pour tamisage centripète, avec barrettes proéminentes de place en place;

La figure 8 illustre une autre variante à barrettes dissymétriques;

Les figures 9 et 10 illustrent en plan et perspective un tamis plan, selon l'invention;

La figure 11 illustre le mode de montage d'une barrette sur des traverses;

Les figures 12 et 13 illustrent le mode de fermeture d'un tamis cylindriques;

La figure 14 illustre un détail de montage du tamis dans l'épurateur;

La figure 15 est un exemple de tamis à section polygonale;

La figure 16 est une variante de la configuration en section des premières encoches et des traverses (variante de la figure 4).

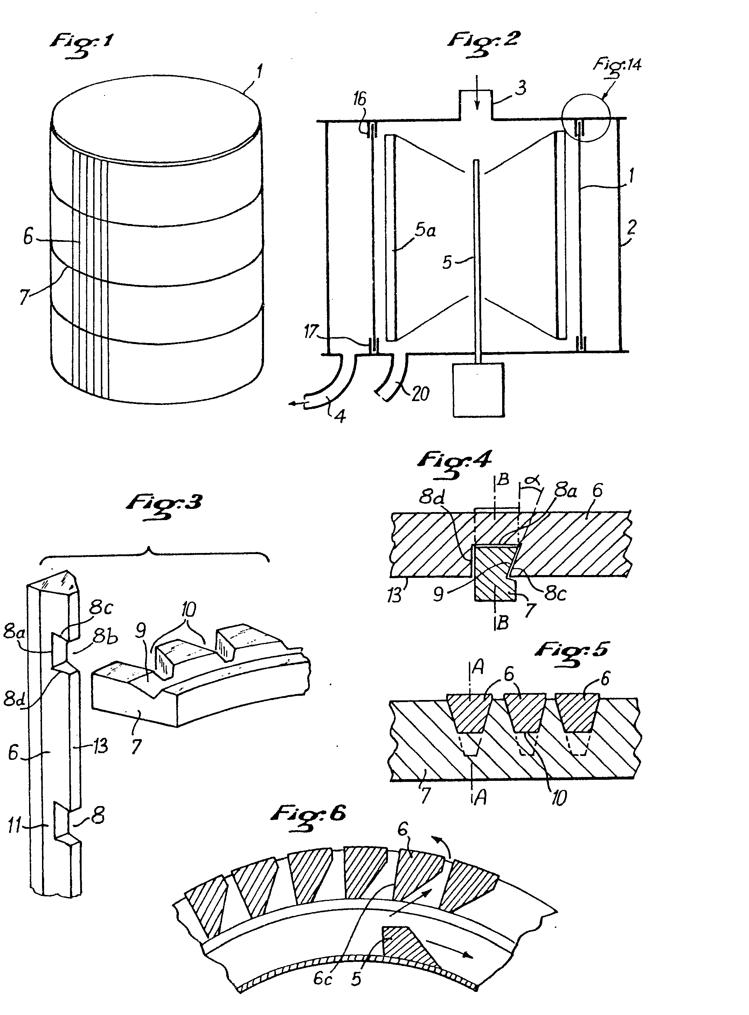

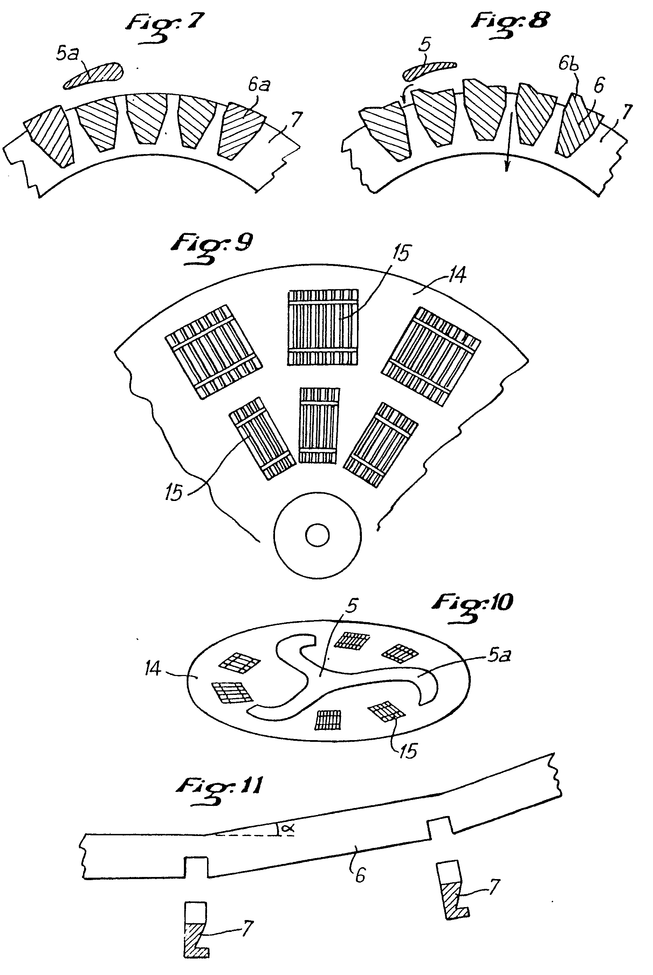

En se reportant aux figures 1 à 5, on voit que le tamis 1 d'un épurateur 2 qui comprend dans le cas, pris comme exemple, d'un épurateur centrifuge, une arrivée de pâte 3, une sortie de pâte 4, une sortie de refus 20 et un rotor à ailettes ou foils 5, est réalisé par asssemblage sans soudure de barrettes 6 sur des traverses 7.

Les barrettes 6 comportent, à l'entraxe des traverses 7, des «premières encoches» 8 en queue d'aronde, c'est-à-dire des encoches dont le fond 8a est plus grand que l'entrée 8b; les traverses 7 comportent au moins une rainure latérale 9 à section en V dans laquelle pénètre une lèvre telle que la lèvre 8c d'une encoche 8; les traverses 7 portent également des «secondes encoches» 10, dans lesquelles viennent se placer les parties 11 des barrettes 6 non entaillées par les encoches 8; la section transversale des traverses au droit des encoches 10 a mêmes configuration et dimensions que la section des encoches 8 sur la profondeur de ces dernières (figure 4); la section transversale des barrettes au droit des encoches 8 a même configuration que la section des encoches 10 sur la profondeur de ces dernières (figure 5).

Il résulte de cette disposition, que les barrettes sont à la fois rigoureusement positionnées par les encoches 10, et solidement assemblées par la coopération des encoches 8 et de la ou des rainures 9. On peut donc ainsi réaliser sans soudure un tamis à fentes calibrées, soumis à des efforts mécaniques intenses, efforts dus à la vitesse de rotation élevées du rotor 5 à ailettes 5a.

Dans les fabrications usuelles de ces types d'appareils, les tamis sont souvent réalisés par fraisage de tôles d'acier inoxydable, de 6 à 8 mm d'épaisseur, en vue de réaliser des fentes d'une finesse de quelques dixièmes de millimètres.

Avec le mode de réalisation de l'invention, on peut employer des barrettes 6 d'une épaisseur analogue (6 à 8 mm), assemblées par des traverses 7 d'épaisseur voisine, de sorte que la construction utilise un poids de métal analogue. Mais on peut également augmenter la résistance, en utilisant des dimensions supérieures, notamment pour les traverses, avec des coûts de fabrication inférieurs du fait de la suppression du fraisage des fentes. Par ailleurs, on évite les inconvénients de la soudure qui ont été cités plus haut.

Les figures 12 et 13 illustrent comment l'invention permet d'éviter également les soudures pour réaliser la fermeture d'un tamis cylindrique.

Chaque extrémité 7a, 7b d'une traverse 7 voit, sur une longueur couverte par plusieurs barrettes 6, son épaisseur diminuée, dans la direction parallèle aux barrettes 6, de telle sorte que le total des épaisseurs de 7a et 7b soit égal à l'épaisseur de la traverse 7 et que la face de séparation 12 soit de préférence approximativement médiane. La mise en place et le serrage des barrettes 6 sur les parties 7a et 7b superposées assure alors la fermeture du tamis.

Pour éviter tout possible glissement relatif des parties 7a et 7b, des goupilles 21 sont de préférence prévues, parallèles aux barrettes 6, situées aux emplacements de celles-ci, et traversant les parties 7a et 7b. Lorsque les barrettes 6 sont mises en place, les goupilles 2 se trouvent emprisonnées et le blocage de l'ensemble est complet.

Dans les figures 3 à 5, on a représenté des encoches 8 ayant une face 8d perpendiculaire à l'axe des barrettes, l'autre face étant inclinée d'un angle alpha de 20 à 25°. Dans ce cas, les traverses 7 ne portent qu'une seule rainure 9 en V sur une seule face latérale (à la différence de la variation de la figure 16).

Cette disposition est préferée parce qu'un angle égal ou supérieur à 90° entre la lèvre 8d et la face externe 13 des barrettes, permet le procédé de montage illustré figure 11. Ce mode de montage et d'assemblage consiste à plier les barrettes 6, au droit des encoches 8 d'un angle au moins égal à l'angle de contre-dépouille alpha des encoches 8 (angle entre les faces 8c et 8d). L'encoche 8 se trouve alors ouverte et la barrette 6 peut être placée sur les traverses 7. Après quoi, on redresse la barrette 6 jusqu'à la rendre rectiligne et à l'enserrer sur les traverses 7. Si l'angle entre les faces 8c et 8d et la face 13 était un angle aigu, comme représenté figure 16, ce mode de mise en place serait plus compliqué et plus difficile à mettre en oeuvre, bien que toujours possible.

L'invention est par ailleurs susceptible de variantes apportant certains perfectionnements.

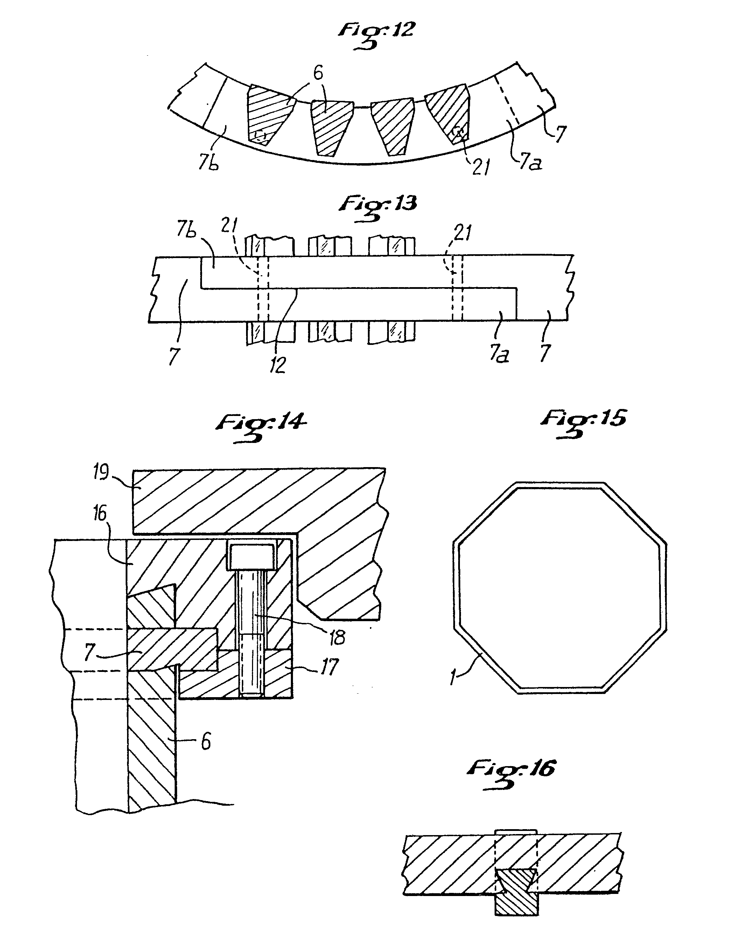

Selon la figure 6, les entrées de fentes sont rendues dissymétriques par l'emploi de barrettes 6 de section dissymétrique: on peut ainsi obtenir les améliorations de fonctionnement qui résultent d'un effet de réflexion du liquide épuré sur la face radiale des fentes, ce qui suppose que l'une des parois latérales 6c d'une barrette 6 (la paroi aval) est à peu près perpendiculaire à la composante tangentielle du mouvement du liquide, c'est-à-dire aux faces antérieure et postérieure de cette barrette.

Selon la figure 7, certaines barrettes 6a sont d'épaisseur plus grande que les autres, créant ainsi, de place en place, par exemple à une distance de 4 à 10 fentes, un obstacles qui freine l'écoulement le long du tamis, ce qui améliore l'efficacité de ce dernier et l'efficacité de nettoyage des ailettes 5.

La figure 8 est une variante de barrettes dissymétriques comportant chacune un talon aval 6b, provoquant des remous ou retours de courant au passage des ailettes 5 et améliorant le fonctionnement des fentes.

Selon les figures 9 et 10, le tamis est plan et les assemblages de barrettes selon l'invention occupent une partie seulement de la surface du tamis 14, et constituent des surfaces de tamisage 15, réalisées selon l'invention et montées dans la surface globale du tamis.

La totalité de la surface du tamis peut également être occupée, par exemple, par l'emploi de surface 15 en forme de secteurs circulaires d'angles au sommet limités (de préférence moins de 40°) et juxtaposés.

La figure 10 illustre en perspective schématique, un tel tamis avec son rotor à ailettes 5, 5a. De préférence, les surface de tamisage 15 sont disposées de telle sorte que, soit les barrettes, soit les traverses aient une direction moyenne radiale (perpendiculaire à la composante tangentielle de la vitesse du liquide).

Le montage d'un tamis cylindrique selon l'invention dans un épurateur peut être réalisé de diverses façons et notamment au moyen de frettes haute et basse 16-17, venant coiffer les extrémités des barrettes 6 du tamis, et enserrer une traverse 7 par boulonnage 18 ou moyen équivalent. Le tamis est monté dans l'épurateur par l'intermédiaire de la pièce 19.

Les tamis selon l'invention seront généralement cylindriques de section circulaire (figures 1, 2) ou plans (figures 9, 10). Mais l'invention n'est pas limitée à ces formes préférées. Ainsi, la figure 15 illustre un tamis en forme de prisme, et l'on peut également utiliser une forme conique ou de révolution, en la réalisant au moyen de surfaces de tamisage montées dans la surface globale du tamis, de façon analogue à la figure 9, ou par secteurs juxtaposés.

L'invention englobe les épurateurs ou autres appareils de filtrage ou d'épuration, notamment pour la fabrication de pâte à papier comprenant un filtre selon la description qui précède.

Dans les exemple et les dessins qui précèdent, les barrettes ont été représentées comme dirigées selon les génératrices d'un cylindre dont les traverses ont la forme de sections droites, et les fentes résultent du rapprochement de deux barrettes adjacentes.

Mais il va de soi que le tamis peut être réalisé à l'inverse avec des traverses parallèles aux génératrices et de barrettes selon la section droite tu tamis.

Ou à l'inverse, les fentes peuvent être réalisées par le rapprochement des traverses assemblées par les barrettes.

Ainsi les fentes obtenues peuvent aussi bien être parallèles à l'axe du tamis et perpendiculaires à la vitesse de déplacement du liquide que perpendiculaires à cet axe et parallèles à la composante de vitesse de déplacement du liquide tangente au tamis.

**Revendications**

1. Tamis à fentes pour épurateurs ou séparateurs, et notamment pour épurateurs de pâte à papier, réalisé sur une partie au moins de sa surface par assemblage de barrettes parallèles (6) sur des traverses (7), caractérisé en ce que les barrettes (6) sont assemblées sans soudure sur les traverses (7) par le moyen d'encoches en queue d'aronde (8) portées par les barrettes (6) (premières encoches), encoches (8) dont les lèvres pénètrent dans au moins une rainure latérale (9) en V portée par chaque traverse (7), celle-ci portant des encoches (10) de positionnement des barrettes (6) sur leur face portant les barrettes (secondes encoches), la section transversale des traverses (7) au droit des secondes encoches (10) ayant mêmes configuration et dimensions que la section des premières encoches (8), et la section transversale des barrettes (6) au droit des premières encoches (8) ayant même configuration que la section des secondes encoches (10) portées par les traverses (7).

2. Tamis selon la revendication 1, caractérisé en ce que les premières encoches sont dissymétriques et ont une face perpendiculaire à l'axe de la barrette, l'autre étant inclinée d'un angle de préférence de l'ordre de 20° à 25°.

3. Tamis selon l'une quelconque des revendications précédentes, caractérisé en ce que les extrémités d'une traverse ont, sur une longueur correspondant à plusieurs encoches, une épaisseur (considérée parallèlement aux barrettes) de l'ordre de la moitié de l'épaisseur dans la zone centrale de façon à reconstituer la section de la traverse par superposition desdites extrémités, lesquelles sont assemblées par serrage des flancs des premières encoches des barrettes qui les recouvrent (fig. 13).

4. Tamis selon l'une quelconque des revendications précédentes, caractérisé en ce que les barrettes et les traverses d'épaisseur voisine et les premières et secondes encoches ont des profondeurs dont la somme est voisine de cette épaisseur.

5. Tamis selon l'une quelconque des revendications précédentes, caractérisé en ce que les barrettes ont une section de forme générale trapézoïdale, et les premières encoches sont placées sur le petit côté du trapèze.

6. Tamis selon l'une quelconque des revendications précédentes, caractérisé en ce qu'il est prévu, de place en place, des barrettes d'épaisseur supérieure constituant des obstacles en surépaisseur sur la face étroite des fentes consituée par le rapprochement des barrettes (fig. 7).

7. Tamis selon l'une des revendications 1 à 5, caractérisé en ce que les barrettes (6) comportent sur leur face large, formant face d'entrée des fentes, une arête (6b) en surépaisseur placée le long d'une des faces latérales (fig. 8).

8. Tamis selon l'une des revendications 1 à 5, caractérisé en ce que certaines au moins des barrettes sont dissymétriques avec une face latérale (6c) approximativement perpendiculaire aux faces antérieure et postérieure (fig. 6).

9. Tamis selon l'une quelconque des revendications précédentes, caractérisé en ce que le tamis est cylindrique de section circulaire ou un prisme, les barrettes sont parallèles à l'axe du cylindre ou du prisme et les traverses sont perpendiculaires à cet axe.

10. Tamis selon l'une quelconque des revendications précédentes, caractérisé en ce que le tamis est plan et comporte une multiplicité de surfaces élémentaires de tamisage réalisées selon l'invention, chacune disposée de sorte que, soit les barrettes, soit les traverses soient disposées sensiblement radialement par rapport au centre du tamis.

11. Mode de réalisation d'un tamis selon l'une quelconque des revendications précédentes, caractérisé en ce qu'il comporte la séquence d'opérations consistant:

à plier les barrettes au niveau des premières encoches selon un angle au moins égal à l'angle de dépouille de ces encoches;

à les placer sur les traverses;

à redresser ensuite les barrettes en enserrant les traverses, et, lorsque le tamis est cylindrique;

à réaliser la fermeture du cylindre par superposition des extrémités de traverses d'épaisseur réduite à la moitié et mise en place, avec serrage, des barrettes.

12. Tamis selon l'une quelconque des revendications 1 à 10, caractérisé en ce que chaque fente résulte du rapprochement de deux barrettes adjacentes, celle-ci étant parallèles à l'axe du tamis.

13. Tamis selon l'une quelconque des revendications 1 à 10, caractérisé en ce que chaque fente résulte du rapprochement de deux barrettes adjacentes, celles-ci étant perpendiculaires à l'axe du tamis et diposées selon une section droite.

14. Tamis selon l'une quelconque des revendications 1 à 10, caractérisé en ce que chaque fente résulte du rapprochement de deux traverses adjacentes, celles-ci étant perpendiculaires à l'axe du tamis et disposées selon une section droite.


**Patentansrprüche**

1. Spaltsieb für Reiniger oder Abscheider, insbesondere für Papierstoffreiniger, das auf wenigstens einem Teil seiner Oberfläche durch Zusammenfügung paralleler Stege (6) auf Querträgern (7) verwirklicht ist, dadurch gekennzeichnet, dass die Stege (6) ohne Schweissverbindung, durch auf den genannten Stegen (6) angebrachte Schwalbenschwanznuten (8) (erste Nuten), auf die Querträger (7) montiert sind, wobei die Lippen der Nuten (8) in wenigstens eine seitliche V-förmige Nut (9) eines jeden Querträgers (7) eingreifen, welche letzteren auf ihrer die Stege tragenden Seite Nuten (10) zur Positionierung der Stege (6) (zweite Nuten) aufweisen, wobei der Querschnitt der Querträger (7) auf der Höhe der zweiten Nuten (10) dieselbe Konfiguration und dieselben Abmessungen besitzt wie der Querschnitt der ersten Nuten (8), und der Querschnitt der Stege (6) auf der Höhe der ersten Nuten (8) dieselbe Konfiguration wie der Querschnitt der zweiten Nuten (10) der Querträger (7) aufweist.

2. Sieb nach Anspruch 1, dadurch gekennzeichnet, dass die ersten Nuten unsymmetrisch sind und eine senkrecht zur Stegachse ausgerichtete Fläche aufweisen, während die andere Fläche vorzugsweise um einen Winkel von etwa 20° bis 25° geneigt ist.

3. Sieb nach einem der vorstehenden Ansprüche, dadurch gekennzeichnet, dass die Enden eines Querträgers über eine mehreren Nuten entsprechende Länge (parallel zu den Stegen betrachtet) eine Dicke aufweisen, die etwa die Hälfte der Dicke des zentralen Bereiches beträgt, um den Querschnitt des Querträgers durch Überlagerung der genannten Enden wiederherzustellen, die durch Festspannen der Flanken der ersten Nuten der sie überdeckenden Stege (Fig. 13) zusammengefügt sind.

4. Sieb nach einem der vorstehenden Ansprüche, dadurch gekennzeichnet, dass die Stege und Querträger merklich gleiche Dicken aufweisen und die ersten und zweiten Nuten Tiefen besitzen, deren Summe dieser Dicke nahekommt.

5. Sieb nach einem der vorstehenden Ansprüche, dadurch gekennzeichnet, dass die Stege einen Querschnitt mit allgemeiner Trapezform zeigen und die ersten Nuten auf der kleinen Seite der Trapezes angeordnet sind.

6. Sieb nach einem der vorstehenden Ansprüche, dadurch gekennzeichnet, dass stellenweise Stege mit grösserer Dicke vorgesehen sind, die Überdickenhindernisse auf der Schmalseite der durch die Annäherung der Stege (Fig. 7) gebildeten Spalte darstellen.

7. Sieb nach einem der vorstehenden Ansprüche 1 bis 5, dadurch gekennzeichnet, dass die Stege (6) auf ihrer die Eintrittsseite der Spalte bildenden Breitseite eine überhöhte Kante (6b) umfassen, die entlag einer der Seitenflächen angeordnet ist (Fig. 8).

8. Sieb nach einem der vorstehenden Ansprüche 1 bis 5, dadurch gekennzeichnet, dass wenigstens einige der Stege unsymmetrisch sind und eine Seitenfläche (6c) aufweisen, die annähernd senkrecht zur Vorder- und Hinterfläche verläuft (Fig. 6).

9. Sieb nach einem der vorstehenden Ansprüche, dadurch gekennzeichnet, dass das Sieb als Kreiszylinder oder als regelmässiges Prisma ausgebildet ist, wobei die Stege parallel zur Achse des Zylinders oder des Prismas und die Querträger senkrecht zu dieser Achse verlaufen.

10. Sieb nach einem der vorstehenden Ansprüche, dadurch gekennzeichnet, dass das Sieb eben ist und eine Mehrzahl elementarer erfindungsgemässer Siebflächen umfasst, von denen jede derart angeordnet ist, dass entweder die Stege oder die Querträger sich merklich radial im Verhältnis zum Siebmittelpunkt erstrecken.

11. Verfahren zur Herstellung eines Siebes nach einem der vorstehenden Ansprüche, dadurch gekennzeichnet, dass es die folgenden Arbeitsgänge umfasst:

die Biegung der Stege auf der Ebene der ersten Nuten um einen Winkel, der wenigstens gleich dem Freiwinkel dieser Nutent ist;

ihr Aufsetzen auf die Querträger;

das anschliessende Aufrichten der Stege unter Einspannen der Querträger und, bei zylindrischem Sieb,

die Verschliessung des Zylinders durch Übereinanderlagerung der Enden der Querträger mit auf die Hälfte verringerter Dicke und Einsetzen der Stege bei gleichzeitigem Festspannen.

12. Sieb nach einem der vorstehenden Ansprüche 1 bis 10, dadurch gekennzeichnet, dass sich jeder Spalt auf der Annäherung zweier benachbarter Stege ergibt, die parallel zur Siebachse verlaufen.

13. Sieb nach einem der vorstehenden Ansprüche 1 bis 10, dadurch gekennzeichnet, dass sich jeder Spalt aus der Annäherung zweier benachbarter Stege ergibt, die senkrecht zur Siebachse verlaufen und gemäss einem Profilschnitt angeordnet sind.

14. Sieb nach einem der vorstehenden Ansprüche 1 bis 10, dadurch gekennzeichnet, dass sich jeder Spalt aus der Annäherung zweier benachbarter Querträger ergibt die senkrecht zur Siebachse verlaufen und gemäss einem Profilschnitt angeordnet sind.

## Claims

1. A slotted sieve for scrubbers or separators, more particularly for paper pulp scrubbers, formed over at least a portion of its surface by parallel bars (6) assembled with cross-members (7), characterized in that the bars (6) are assembled with the cross-members (7) without any welds, by means of swallow-tail shaped notches (8) formed in said bars (6) (first notches), said notches (8) the lips of which engage at least one V-shaped lateral groove (9) formed in each cross-member (7) said cross-members (7) presenting on their face receiving said bars (6) positioning notches (10) (second notches) for positioning said bars (6), the transversal cross-section of said cross-members (7) at the level of said positioning notches (10) of the second set having the same configuration and dimensions as the cross-section of said notches (8) of the first set, while the cross-section of the bars (6) at the level of the notches (8) of the first set presents the same configuration as the cross-section of the notches (10) of the second set formed in the cross-members (7).

2. A sieve according to claim 1, characterized in that the first notches are dissymmetrical and have one face perpendicular to the axis of the bar, the other face being inclined by an angle comprised preferably in the range from 20 to 25°.

3. A sieve according to either of preceeding claims, characterized in that the terminal portions of a cross-member present, over a length correponding to several notches of the second set, a thickness (measured along a parallel to the bars) of approximately half the thickness of the central portion so as to reconstitute the full cross-section of the cross-member by superimposing said end portions which are thereafter assembled by tightening together the flanks of the notches of the first set formed in the bars overlying said end portions (Fig. 13).

4. A sieve according to any of the above claims, characterized in that the bars and the cross-members are approximately on the same thickness and that the notches of both sets have depths the sum of which is approximately equal to said thickness.

5. A sieve according to any of the above claims, characterized in that the bars have a generally trapeze-shaped cross-section and the notches of the first set are located on the smaller side of the trapeze.

6. A sieve according to any of the above claims, characterized in that there are provided from place to place some thicker bars which form protruding obstacles over the narrow face of the slots formed between the bars as these bars lie close to each other (Fig. 7).

7. A sieve according to any of claims 1 to 5, characterized in that the bars (6) comprise, on their wider face forming the upstream face of the slots, a spur (6b) protruding beyond one of the lateral faces (Fig. 8).

8. A sieve according to any of claims 1 to 5, characterized in that at least some of the bars are dissymmetrical with one lateral face (6c) approximately perpendicular to the anterior and posterior faces (Fig. 6).

9. A sieve according to any of the above claims, characterized in that the sieve is cylindrical, with a circular polygonal cross-section, or a regular prism, the bars being parallel to the cylinder or to the prism axis and the cross-members perpendicular to said axis.

10. A sieve according to any of the above claims, characterized in that the sieve is planar and comprises a plurality of elementary sieving surfaces manufactured in accordance with the invention, each surface being arranged so that either the bars or the cross-members are approximately oriented radially towards the center of the sieve.

11. A method for producing a sieve according to any of the above claims, characterized in that it comprises the following sequence of steps:

folding the bars at the level of the notches of the first set by an angle at least equal to the rake angle of said notches;

placing said bars over the cross-members;

subsequently straightening the bars so as to clamp the cross-members and, in the case where the sieve is cylindrical:

closing the cylinder by superimposing together the end portions having half the thickness of the central portion of the cross-members, and then bringing the bars into place and clamping the cross-members within the notches of said bars.

12. A sieve according to any of claims 1 to 10, characterized in that each slot is formed between two adjacent bars which are parallel to the axis of the sieve.

13. A sieve according to any of claims 1 to 10, characterized in that each slot is formed between two adjacent bars which are perpendicular to the axis of the sieve, and disposed along a perpendicular cross-section.

14. A sieve according to any of claims 1 to 10, characterized in that each slot is formed between two adjacent cross-members which are perpendicular to the axis of the sieve along a perpendicular cross-section.

Fig.1

Fig.2

Fig.14

Fig.3

Fig.4

Fig.5

Fig.6

Fig. 7

5a

6a

7

Fig. 8

5

6b

6

7

Fig. 9

15

14

15

Fig. 10

5

14

5a

15

Fig. 11

α

6

7

7

## Fig.12

## Fig.13

## Fig.14

## Fig.15

## Fig.16